# EUROPÄISCHE PATENTSCHRIFT

(11) **EP 0 309 528 B1**
(45) Veröffentlichungstag und Bekanntmachung des Hinweises auf die Patenterteilung: **23.03.1994**
(21) Anmeldenummer: 88903238.9
(22) Anmeldetag: 08.04.1988
(51) Int. Cl.: G02B 27/22, G02B 27/00, H04N 13/04

(54) **STEREOSKOPISCHES DISPLAY-SYSTEM**
STEREOSCOPIC DISPLAY SYSTEM
SYSTEME D'AFFICHAGE STEREOSCOPIQUE

(30) Priorität: 10.04.1987 DE 3712170
(43) Veröffentlichungstag der Anmeldung: 05.04.1989
(73) Patentinhaber: HOLTRONIC GESELLSCHAFT FÜR HOLOGRAPHIE UND ELEKTRO-OPTIK MBH, D-85652 Pliening (DE); Bayerische Motoren Werke Aktiengesellschaft, 80788 München (DE)
(72) Erfinder: GNÄDIG, Klaus, A., D-8000 München 5 (DE)
(74) Vertreter: Gossel, Hans K., Dipl.-Ing.
(86) Internationale Anmeldenummer: EP8800292
(87) Internationale Veröffentlichungsnummer: WO8808146

(56) Entgegenhaltungen:
- EP-A- 0 181 638
- US-A- 4 535 354
- US-A- 4 623 223
- Journal of the SMPTE, Band 80, Nr. 7, Juli 1971, (Scarsdale, US), S. Herman : "Principles of binocular 3D displays with applications to television", Seiten 539-544.
- PATENT ABSTRACTS OF JAPAN, Band 10, Nr. 40 (M-454)(2097), 18. Februar 1986 ; & JP-A-60191847
- "Applied Optics and Optical Engineering", Band II, 1965 (Academic Press), Seiten 87-92.

## Beschreibung

Die Erfindung betrifft ein stereoskopisches Display-System. Derartige Systeme dienen dazu, dreidimensionale Darstellungen zu erzeugen, also Darstellungen, die der Betrachter als dreidimensional wahrnimmt. Stereoskopische Display-Systeme können vielfach angewendet werden, beispielsweise in Simulatoren (Flugsimulatoren, Schiffsimulatoren, Fahrzeugsimulatoren oder ähnliches), in Videospielen, in CAD/CAM (Computer Aided Design/Computer Aided Manufacturing)-Systemen, in Graphiksystemen, in Videoanimations-Systemen, in Werbe-Displays und in weiteren Anwendungsfällen. Insbesondere kann ein stereoskopisches Display-System vorteilhaft in einem Kraftfahrzeug angewendet werden, um beispielsweise Symbole oder ähnliche Darstellungen in variabler Entfernung für den Fahrer darzustellen.

Aus der EP-A 181 638 ist ein Raumbild-Sichtgerät bekannt, das aus zwei Display-Elementen, zwei Abbildungsoptik-Systemen und einer Lupe besteht. Der Brennpunkt der Lupe liegt in der Ebene des reellen Zwischenbildes.

Aus der JP-A 60 191 847 ist ein Display-System für ein Kraftfahrzeug bekannt, bei dem die anzuzeigenden Daten an der Windschutzscheibe des Kraftfahrzeuges gespiegelt werden, so daß sie mit der Außensicht überlagert werden.

Aufgabe der Erfindung ist es, ein stereoskopisches Display-System zu schaffen, welches einfach aufgebaut ist, kostengünstig hergestellt werden kann und sich besonders für den Einbau in Fahrzeuge, insbesondere Kraftfahrzeuge, eignet.

Erfindungsgemäß wird diese Aufgabe durch die Kombination der Merkmale des Anspruchs 1 gelöst. Dadurch, daß mehr als zwei Display-Elemente vorhanden sind, werden die Korrekturansprüche geringer, weil die Rasterung feiner wird und dadurch die einzelnen Kanäle schmäler werden.

Da mehr als zwei Display-Elemente und damit auch mehr als zwei Abbildungselemente vorgesehen sind, wird darüberhinaus ein autostereoskopisches Display-System erreicht.

Die Erfindung beruht dabei auf dem Prinzip, daß die optische Bildlokalisation immer fest bleibt, während der Entfernungseindruck für den Betrachter durch einfache Mittel variabel gestaltet werden kann. Diese einfachen Mittel bestehen darin, die Querdisparation, die Konvergenz und die scheinbare Größe des Objekts für den Betrachter zu verändern. Diese Veränderung kann durch Verschiebung und Vergrößerung bzw. Verkleinerung der Darstellungen auf den Display-Elementen erfolgen, vorteilhafterweise auf elektronischem und nicht auf mechanischem Weg. Die gleichbleibende Lokalisation der abgebildeten Symbole und Darstellungen ist deshalb besonders vorteilhaft, weil dadurch auf mechanisch bewegte Teile in dem System verzichtet werden kann, die ansonsten erforderlich wären. Gleichwohl kann ein stereoskopischer Eindruck durch die oben genannten Mittel erzeugt werden.

Vorzugsweise dienen die Ränder der Abbildungsoptik als Feldblende. Der Aufbau des Systems wird dadurch vereinfacht. Für die Feldblenden sind keine gesonderten Bauteile erforderlich.

Der Brennpunkt der Lupe kann in der Ebene des reellen Zwischenbildes angeordnet sein. Es ist aber auch möglich, daß der Brennpunkt der Lupe im Strahlengang vor dem reellen Zwischenbild angeordnet ist. Weiterhin kann das reelle Zwischenbild in der Mittelebene der Lupe erzeugt werden, wodurch die Lupe zu einer Bildfeldlinse wird. Wenn der Brennpunkt der Lupe in der Ebene des reellen Zwischenbildes liegt, wird das reelle Zwischenbild durch die Lupe ins Unendliche abgebildet. Wenn das reelle Zwischenbild in der Ebene der Lupe erzeugt wird, wird diese Lupe zu einer Bildfeldlinse. Diese Ausführungsform eignet sich insbesondere für die Verwendung in CAD/CAM-Systemen oder bei Werbe-Displays, bei Videospielen und bei Simulatoren. Der Betrachter sieht den abgebildeten Gegenstand im wesentlichen in der Ebene der Lupe.

Es ist möglich, nur eine einzige Lupe vorzusehen. Stattdessen können auch mehrere Lupen vorgesehen sein, wobei die Anzahl der Lupen genauso groß sein kann wie die Anzahl der Abbildungselemente. Wenn nur eine einzige Lupe verwendet wird, wird das größtmögliche Gesichtsfeld und die größtmögliche Lichtstärke erreicht. Die Verwendung mehrerer Lupen gestattet auf einfachere Art und Weise die Erzeugung eines breiteren Bildfeldes. Weiterhin sind die Korrekturansprüche an die einzelnen Lupen geringer.

Die Display-Elemente können längs einer Geraden angeordnet sein. Es ist aber auch möglich, die Display-Elemente längs eines ersten Kreisbogens anzuordnen und die Abbildungselemente längs eines zweiten Kreisbogens mit kleinerem Radius und demselben Mittelpunkt anzuordnen, so daß die reellen Zwischenbilder in der Nähe dieses gemeinsamen Mittelpunktes erzeugt werden. Durch die Anordnung der Display-Elemente auf einem Kreisbogen wird die Zentrierung der Augen des Betrachters auf ein dreidimensionales Objekt besser nachgebildet. Die Display-Elemente können tangential zu dem ersten Kreisbogen angeordnet sein. Sie können aber auch im Winkel zu dem ersten Kreisbogen angeordnet sein, und zwar derart, daß die Winkel, ausgehend von dem mittleren Display-Element, mit zunehmender Entfernung von diesem derart zunehmen, daß die reellen Zwischenbilder im wesentlichen an derselben Stelle in der Nähe des Mittelpunktes der Kreisbögen und im wesentlichen parallel zueinander entstehen. Die Anordnung kann auch derart getroffen sein, daß die reellen Zwischenbilder in der Mittelebene der Bildfeldlinse entstehen.

Wenn das reelle Zwischenbild in der Mittelebene der Lupe erzeugt wird, wenn also die Lupe zu einer Bildfeldlinse wird, ist es vorteilhaft, daß die Lupe eine zylindrische Komponente besitzt, deren Achse horizontal, also senkrecht zur Höhe des reellen Bildes der Feldblenden und senkrecht zum Strahlengang, gerichtet ist. Die zylindrische Komponente kann durch ein Zylinderlinienraster, vorzugsweise ein feines Raster mit einem Rasterabstand von 0,1 - 1 mm, oder eigen einachsigen Diffusor mit statistischen Linienstrukturen in horizontaler Richtung, erzeugt werden.

Die Abbildungsoptik und/oder die Lupe können aus reflektiven optischen Elementen, vorzugsweise Hohlspiegeln und/oder aus holografischen optischen Elementen (HOE) bestehen.

Die Display-Elemente können auf verschiedene Arten realisiert werden. Möglich sind unter anderem folgende Bauteile: Eine Kathodenstrahlröhre, die voneinander unabhängige Bereiche aufweist; mehrere Kathodenstrahlröhren; mehrerer LCD-Anzeigen (Liquid Crystal Display); Elektrolumineszenz-Elemente; Plasma-Display-Elemente. Die LCD-Anzeigeelemente können sowohl transmissiv als auch reflektiv ausgeführt sein. Es ist auch möglich, mehrere Display-Elemente auf einem einzigen physikalischen Träger, beispielsweise einer einzigen Kathodenstrahlröhre vorzusehen; hierzu wird die Kathodenstrahlröhre in mehrere Bereiche unterteilt; jeder der Bereiche entspricht dabei einem Display-Element.

Eine weitere Lösung der obengenannten Aufgabe, für die selbständig Schutz beansprucht wird, besteht in der Kombination der Merkmale des Anspruchs 16. Diese Lösung ist gekennzeichnet durch genau zwei transmissive, nicht diffus streuende Display-Elemente, vorzugsweise transmissive Liquid-Cristal-Displays, eine flächige Lichtquelle, vorzugsweise eine ausgeleuchtete Mattscheibe, im Strahlengang vor dem Display-Elementen, genau zwei Lupen, deren eine ein reelles Bild der flächigen Lichtquelle im Bereich eines Auges des Betrachters und deren andere ein reelles Bild der flächigen Lichtquelle im Bereich des anderen Auges des Betrachters erzeugt, wobei der Brennpunkt der Lupen in der Ebene der Display-Elemente oder im Strahlengang vor der Ebene der Display-Elemente angeordnet ist und wobei die Begrenzungen der flächigen Lichtquelle derart ausgestaltet sind, daß die beiden reellen Bilder der flächigen Lichtquelle einander nicht überlappen.

Diese Lösung beinhaltet also ein verkürztes stereoskopisches Display-System ohne Zwischenbild, bei dem die Ränder der flächigen Lichtquelle als Feldblende dienen. Das System wird dadurch verkürzt, daß kein Zwischenbild vorgesehen ist. Vorzugsweise sind die Begrenzungen der flächigen Lichtquelle derart ausgestaltet, daß die beiden reellen Bilder der flächigen Lichtquelle unmittelbar aneinander angrenzen, vorzugsweise längs der Mittelsenkrechten zwischen den Augen des Betrachters. Hierdurch wird der größtmögliche stereoskopische Sehbereich erreicht. Weiterhin ist es vorteilhaft, wenn die Begrenzungen der flächigen Lichtquelle an den beiden seitlichen Rändern durch vertikale Begrenzungslinien gebildet werden. Die ist die einfachste und kostengünstigste Ausgestaltung.

Wenn im Strahlengang zwischen den Display-Elementen und der flächigen Lichtquelle, vorzugsweise möglichst nahe an den Display-Elementen, eine weitere Linse angeordnet ist, wird eine weitere Verkürzung des Systems erreicht. Die weitere Linse bildet die flächige Lichtquelle virtuell ab. Dieses virtuelle Bild der flächigen Lichtquelle wird dann von den Lupen im Augenbereich des Betrachters reell abgebildet. Es wird also nicht die flächige Lichtquelle selbst, sondern deren durch die weitere Linse erzeugtes virtuelles Bild von den Lupen reell abgebildet. Dies ermöglicht die weitere Verkürzung des Systems. Die Verkürzung ist um so größer, je näher die weitere Linse an den Display-Elementen angeordnet ist.

Besonders vorteilhaft kann die Erfindung in einem Kraftfahrzeug angewendet werden. Vorzugsweise erfolgt die Überlagerung mit der Außensicht durch Spiegelung an der Windschutzscheibe.

Vorteilhafte Weiterbildungen sind in den Unteransprüchen beschrieben. Insbesondere eignet sich das System zur Verwendung in Kraftfahrzeugen.

Ausführungsbeispiele der Erfindung werden nachstehend anhand der Zeichnungen im einzelnen erläutert. In den Zeichnungen zeigt
- Fig. 1: den Strahlengang eines stereoskopischen Display-Systems in einer schematischen Darstellung,
- Fig. 2: ein stereoskopisches Display-System mit mehreren nebeneinander angeordneten Kanälen in einer perspektivischen Darstellung,
- Fig. 2a: ein verkürztes stereoskopisches Display-System ohne reelles Zwischenbild,
- Fig. 2b: eine Modifizierung des in Fig. 2a dargestellten Systems, wobei eine zusätzliche Verkürzung des Systems durch Verwendung einer weiteren Abbildungslinse erreicht wird.
- Fig. 2c: eine stereoskopisches Display-System mit auf einem Kreisbogen angeordneten Display-Elementen,
- Fig. 2d: das in Fig. 2c gezeigte System in einer vergrößerten Darstellung,
- Fig. 2e: das in Fig. 2d gezeigte System in einer Stellung mit abgewinkelten Display-Elementen,
- Fig. 3: den Strahlengang des in Fig. 1 dargestellten Systems bei dem das Zwischenbild in der Ebene der zweiten Abbildungsoptik liegt,
- Fig. 4: das in Fig. 3 dargestellte System in einer perspektivischen Darstellung mit mehreren nebeneinander angeordneten Kanälen,
- Fig. 5: ein in einem Kraftfahrzeug angeordnetes stereoskopisches Display-System,
- Fig. 6: ein weiteres in einem Kraftfahrzeug angeordnetes stereoskopisches Display-System,
- Fig. 7: ein in einem Kraftfahrzeug angeordnetes stereoskopisches Display-System mit Linsenoptik und
- Fig. 8: ein in einem Kraftfahrzeug angeordnetes stereoskopisches Display-System mit gefaltetem Strahlengang und Spiegeloptik.

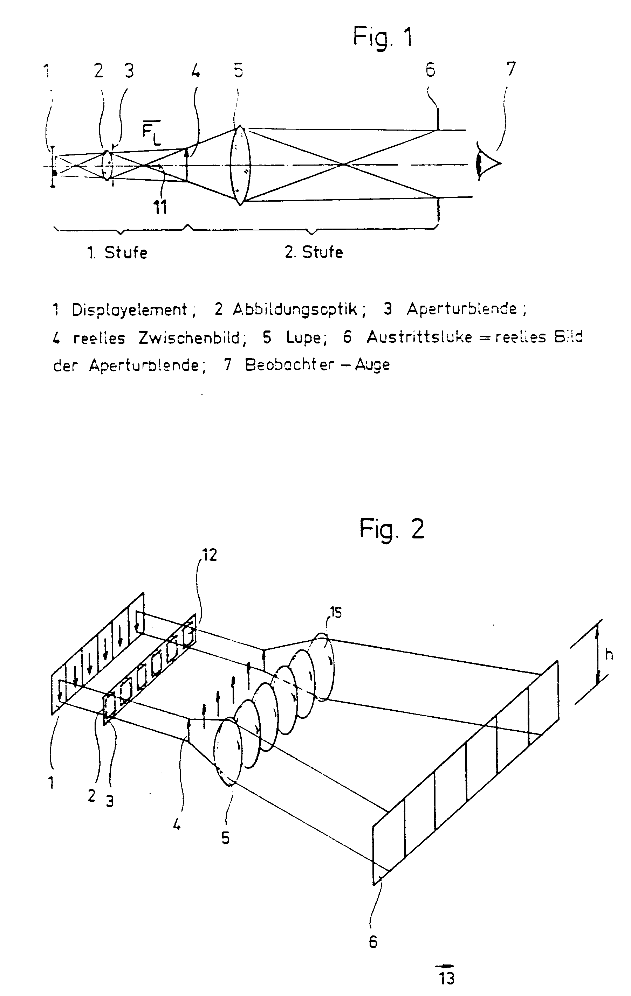

Die Fig. 1 zeigt den Strahlengang des stereoskopischen Display-Systems in einer schematischen Darstellung. Die Fig. 1 zeigt dabei einen Querschnitt durch einen einzigen Kanal des Systems. Die Display-Ebene ist mit 1 bezeichnet. Das Display kann ein CRT-Display (Cathode Ray Tube) sein. Diese Kathodenstrahlröhre muß mindestens zwei unabhängige Display-Bereiche aufweisen, um einen stereoskopischen Effekt zu ermöglichen. In der Fig. 1 ist lediglich ein Kanal, also ein Display-Bereich gezeigt. An der mit 2 bezeichneten Ebene befindet sich die Abbildungsoptik für die erste Stufe, die in der Ebene 4 ein reelles Zwischenbild erzeugt. Die erste Stufe der Abbildungsoptik besteht also aus dem Display-Element 1, der Abbildungsoptik 2 und dem reellen Zwischenbild 4. Unmittelbar hinter der Abbildungsoptik 2 befindet sich die Feldblende 3; dies kann auch der Linsenrand der Abbildungsoptik 2 selbst sein.

Die zweite Stufe des Display-Systems besteht aus der Lupe 5 und der Austrittsluke 6. Diese Austrittsluke 6 ist nicht körperlich vorhanden, sondern ist nichts anderes als das reelle Bild der Feldblende 3. Der Brennpunkt der Lupe 5 befindet sich an der Stelle 11, also im Strahlengang vor dem reellen Zwischenbild 4. Damit wird das reelle Zwischenbild 4 durch die Lupe 5 virtuell abgebildet. Für das Auge 7 des Betrachters ist bei der in Fig. 1 gewählten Ausführungsform das virtuelle Bild des reellen Zwischenbildes 4 links vom Display-Element 1 lokalisiert. Das reelle Zwischenbild 4 befindet sich zwischen der Lupe 5 und dem Brennpunkt 11 dieser Lupe 5.

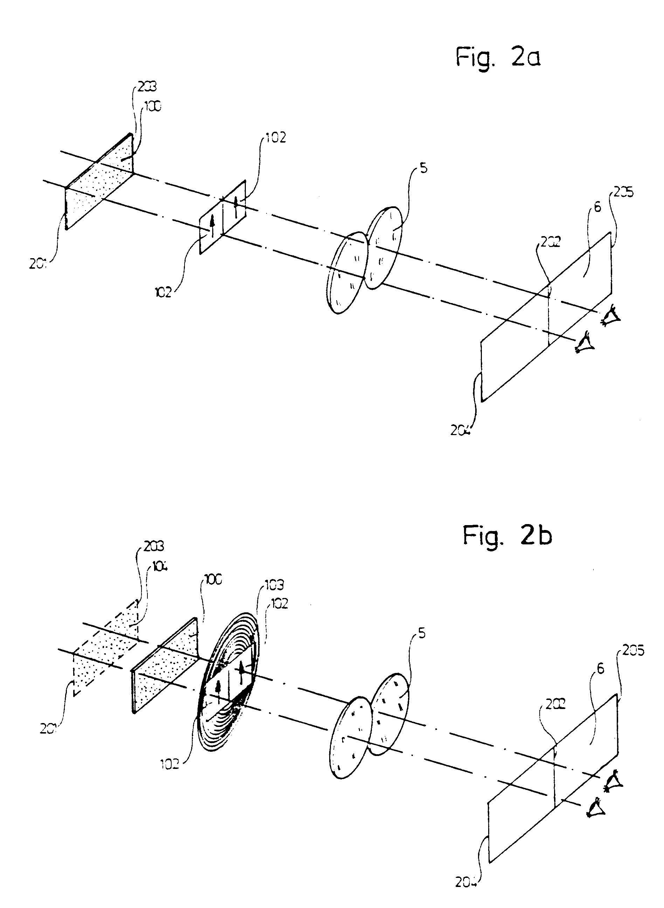

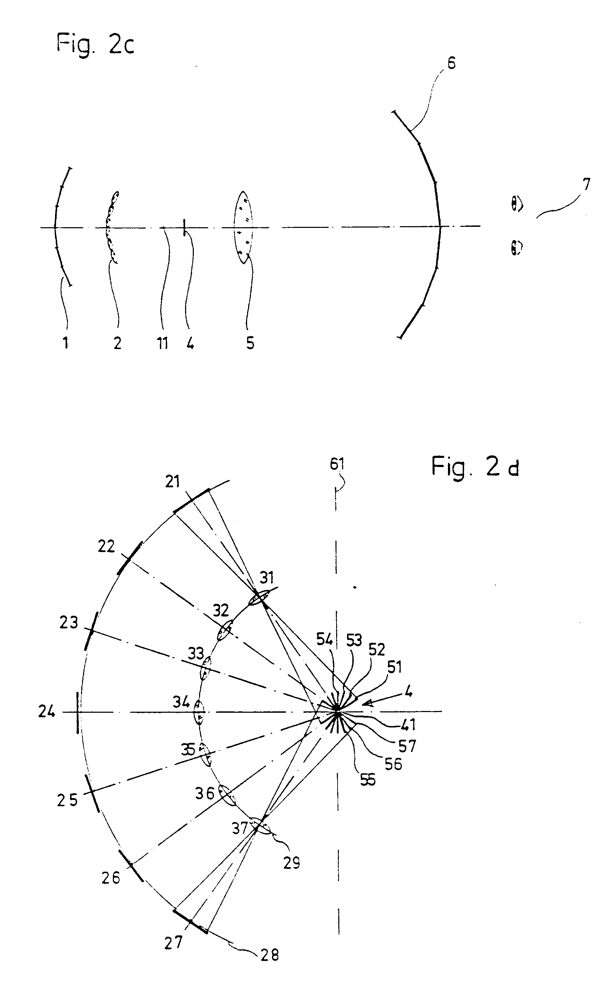

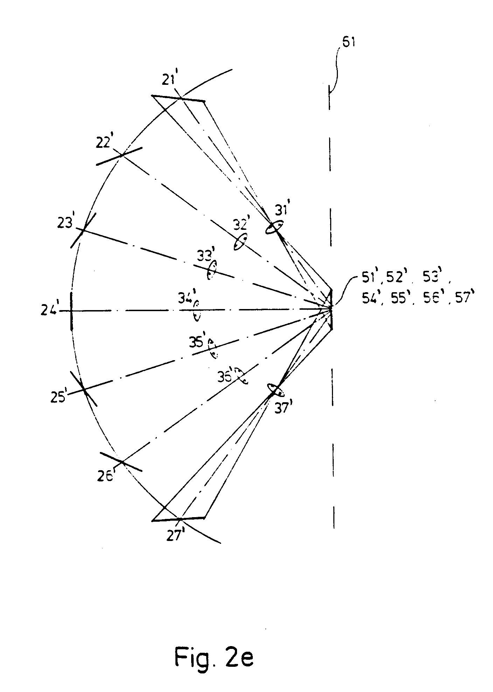

In der Fig. 2 ist das stereoskopische Display-System in einer perspektivischen Darstellung gezeigt. Dabei sind sechs Kanäle nebeneinander angeordnet. Die Verhältnisse bei einem Kanal ergeben sich aus der Fig. 1. Mit 1 ist wiederum das Display-Element bezeichnet, welches sechs voneinander unabhängige Darstellungsbereiche besitzt. Es ist möglich, daß diese unabhängigen Bereiche von einer einzigen Kathodenstrahlröhre gebildet werden, die voneinander unabhängige Bereiche aufweist. Es ist aber auch möglich, sechs Kathodenstrahlröhren nebeneinander anzuordnen. Das Display-Element kann auch aus LCD-Anzeigen (Liquid Crystal Display) bestehen. Die LCD-Anzeigen können sowohl transmissiv als auch reflektiv ausgeführt sein, wobei bei beiden Ausführungsformen eine zusätzliche Beleuchtungseinrichtung zur Beleuchtung der LCD-Anzeigeelemente erforderlich ist. Es können auch beliebige andere Display-Elemente verwendet werden, beispielsweise Elektrolumineszenz-Elemente oder Plasma-Display-Elemente.

In der Fig. 2 befindet sich die Abbildungsoptik 2 im Abstand von den Display-Elementen. Diese Abbildungsoptik 2 besteht aus mehreren nebeneinander angeordneten Linsen. Da sechs Display-Elemente verwendet werden, müssen auch sechs Linsen für die Abbildungsoptik 2 verwendet werden. Jede Linse ist dabei einem Display-Element in der Weise zugeordnet, daß sie nur dieses eine Display-Element abbildet; ein "Übersprechen" muß durch entsprechende Blenden vermieden werden. Diese Blenden können beispielsweise lichtundurchlässige, ebene Flächen sein, die zwischen den Display-Elementen und der Abbildungsoptik angeordnet sind. Die Flächen verlaufen parallel zu dem in Figur 2 eingezeichneten Strahlengang; sie schneiden die Ebene der Display-Elemente an den Trennungslinien zwischen zwei Display-Elementen und die Ebene der Abbildungsoptik 2 ebenfalls zwischen zwei Abbildungselementen. Die Linsen 12 der Abbildungsoptik 2 können einfache Linsen sein. Es ist aber auch möglich, korrigierte Linsen zu verwenden, die bei der Verwendung in einem Kraftfahrzeug einen Teil der Korrektur der Windschutzscheibenkrümmung übernehmen können. Ebenso ist es möglich, die aus mehreren Linsen 12 bestehende Abbildungsoptik 2 durch ein holographisches optisches Element (HOE) zu ersetzen, welches die gleiche Funktion erfüllt.

Durch die Abbildungsoptik 2, die aus sechs Linsen 12 besteht, werden die sechs Display-Elemente 1 in sechs nebeneinander befindliche reelle Zwischenbilder 4 abgebildet. Die erste Stufe des stereoskopischen Display-Systems besteht wie bei Fig. 1 wieder aus dem Display-Element 1, der Abbildungsoptik 2, der Feldblende 3 und dem reellen Zwischenbild 4. Die zweite Stufe besteht aus der Lupe 5 und der Austrittsluke 6, wobei die Austrittsluke wieder nicht tatsächlich vorhanden ist, sondern lediglich aus dem Bild der Feldblende 3 besteht. In der Fig. 2 besteht die Lupenoptik 15 aus mehreren Lupen 5. Wie bei der Fig. 1 befindet sich das reelle Zwischenbild 4 zwischen den Brennpunkten der Lupen 5 und diesen Lupen 5. Es ist auch möglich, die Brennpunkte der Lupen 5 in die Ebene des reellen Zwischenbildes 4 zu legen; in diesem Fall wird das reelle Zwischenbild 4 durch die Lupen 5 ins Unendliche abgebildet. Anstelle mehrerer Lupen 5 kann auch eine einzige Lupe verwendet werden. Die Anzahl der zu verwendenden Lupen muß nicht mit der Anzahl der Display-Elemente bzw. der Linsen der Abbildungsoptik 2 übereinstimmen. Wenn nur eine einzige Lupe 5 verwendet wird, wird das größtmögliche Gesichtsfeld erreicht sowie die größtmögliche Lichtstärke. Wenn mehrere Lupen 5 verwendet werden, kann auf einfachere Art und Weise ein breiteres Bildfeld 6 erzeugt werden und die Korrekturansprüche an die einzelnen Lupen sind geringer, da bei der Verwendung mehrerer Lupen die einzelnen Lupen kleiner sind. Insbesondere bei der Verwendung in einem Kraftfahrzeug ist die Verwendung mehrerer Lupen vorteilhaft, weil die Windschutzscheibe, die in den Strahlengang miteinbezogen wird, asymmetrisch gekrümmt ist. Bei der Verwendung mehrerer Lupen kann jede Lupe auf den Bereich der Windschutzscheibe abgestimmt werden, über den das zugehörige Strahlenbündel läuft. Die aus der oder den Lupen 5 bestehende Lupenoptik 15 kann auch aus einem holographischen optischen Element (HOE) bestehen.

Ein Ausführungsbeispiel der weiteren Lösung der der Erfindung zurundeliegenden Aufgabe ist in den Figuren 2a und 2b dargestellt. Diese Lösung ist nicht zweistufig, sondern lediglich einstufig. Es ist also keine Abbildungsoptik vorhanden und demzufolge auch kein reelles Zwischenbild. Die Display-Elemente werden vielmehr unmittelbar durch die Lupen abgebildet. Weiterhin ist es bei dieser Lösung erforderlich, eine flächige Lichtquelle vorzusehen, deren Ränder gleichzeitig als Feldblende dienen. Diese weitere Lösung, die einen verkürzten Strahlengang ermöglicht, kann dann angewendet werden, wenn ein klartransparentes, nicht diffus streuendes oder ermittierendes Display, wie beispielsweise ein LCD, verwendet wird.

In Figur 2a sind links genau zwei klartransparente, nicht diffus streuende oder emittierende Display-Elemente 102, nämlich transmittive Liquid-Crystal-Displays, angeordnet. Im Strahlengang vor den Display-Elementen 102 befindet sich eine flächige Lichtquelle 100, die von einer ausgeleuchteten Mattscheibe gebildet wird. Die Begrenzung dieser Mattscheibe ist rechtecktig. Der Bereich außerhalb der Lichtquelle 100 sollte ausgeblendet sein, damit ein Übersprechen der beiden Kanäle verhindert wird. Es sind genau zwei Lupen 5 im Strahlengang hinter den Display-Elementen 102 angeordnet, deren eine ein reelles Bild der flächigen Lichtquelle 100 im Bereich eines Auges des Betrachters und deren andere ein reelles Bild der flächigen Lichtquelle 100 im Bereich des anderen Auges des Betrachters erzeugt. Diese beiden reellen Bilder sind mit der Bezugsziffer 6 angedeutet. Der Brennpunkt der Lupe 5 liegt im Strahlengang vor der Ebene der Display-Elemente 102. Die Begrenzungen der flächigen Lichtquelle 100 sind derart ausgestaltet, daß die beiden reellen Bilder der flächigen Lichtquelle einander nicht überlappen. Die Mattscheibe 100 wird von der linken Lupe 5 in das linke Rechteck 6 und von der rechten Lupe 5 in das rechte Rechteck 6 jeweils reell abgebildet. Die beiden Rechtecke überlappen einander nicht. Der linke Rand 201 der Mattscheibe 100 wird also von der linken Lupe 5 in die Mittelsenkrechte 202 zwischen den Augen des Betrachters reell abgebildet. Der rechte Rand 203 der Mattscheibe 100 wird von der linken Lupe 5 in die linke äußere Bildfeldbegrenzung 204 reell abgebildet; letztere verläuft parallel zur Mittelsenkrechten 202. Entsprechend sind die Verhältnisse hinsichtlich der rechten Lupe 5: Die rechte Begrenzung 203 der Mattscheibe 100 wird von der rechten Lupe 5 in die Mittelsenkrechte 202 zwischen den Augen des Betrachters reell abgebildet. Der linke Rand 201 der Mattscheibe 100 wird von der rechten Lupe 5 in die rechte äußere Bildfeldbegrenzung 205 reell abgebildet. Die Anordnung ist also so getroffen, daß die beiden reellen Abbildungen der Mattscheibe 100 unmittelbar aneinander angrenzen, ohne einander zu überlappen. Bei der in Figur 2a gezeigten Ausführungsform werden die Begrenzungen 201, 203 der flächigen Lichtquelle 100 an den beiden seitlichen Rändern durch vertikale Begrenzungslinien 201, 203 gebildet.

Die Figur 2b zeigt ein gegenüber der Figur 2a nochmals verkürztes System. Zwischen der Mattscheibe 100 und den Display-Elementen 102 ist eine weitere Linse 103 angeordnet. Diese befindet sich möglichst nahe an den Display-Elementen. Durch diese weitere Linse 103 wird die Mattscheibe 100 virtuell abgebildet. Dieses virtuelle Bild ist durch die Bezugsziffer 104 gekennzeichnet. Der Abstand zwischen dem virtuellen Bild 104 und den Display-Elementen 102 in Figur 2b ist genauso groß wie der Abstand zwischen der Mattscheibe 100 und den Display-Elementen 102 in Figur 2a. Dementsprechend ist der Abstand zwischen der tatsächlich vorhandenen Mattscheibe 100 und den Display-Elementen 102 im Ausführungsbeispiel gemäß Figur 2b kleiner, wodurch die zusätzliche Verkürzung des Systems erzeugt wird. Diese Verkürzung ist um so größer, je geringer der Abstand zwischen der zusätzlichen Linse 103 und den Display-Elementen 102 ist. Die weitere Linse 103 kann aus einer Fresnel-Linse bestehen, die besonders kostengünstig ist und deren Abbildungsungenauigkeiten im allgemeinen in Kauf genommen werden können.

In der Fig. 2 sind die einzelnen Display-Elemente 1 miteinander in einer einzigen Ebene fluchtend angeordnet. Es ist jedoch auch möglich, diese Display-Elemente im Winkel zueinander anzuordnen. Die Display-Elemente können auch auf einem Kreisbogen angeordnet werden. In diesem Fall liegen die Zwischenbilder 4 nicht mehr unbedingt nebeneinander, sondern möglicherweise übereinander. In der Fig. 2c sind die Display-Elemente 1 auf einem Kreisbogen angeordnet. Dementsprechend sind die Abbildungselemente der Abbildungsoptik 2 ebenfalls auf einem Kreisbogen angeordnet. Die reellen Zwischenbilder 4 sind jetzt nicht mehr nebeneinander im Abstand voneinander angeordnet, sondern übereinander. Die reellen Zwischenbilder überlappen sich also. Hinter den reellen Zwischenbildern 4 befindet sich die Lupe 5, deren Brennpunkt mit 11 bezeichnet ist. Hinter der Austrittsluke 6 sind die Augen 7 des Betrachters. Durch die Verwendung eines kreisbogenförmigen Display-Elements wird die Zentrierung der Augen des Betrachters auf ein dreidimensionales Objekt besser nachgebildet. Der räumliche Eindruck wird bei beidäugigem Sehen hauptsächlich durch die Querdisparation zwischen beiden Augen erzeugt. Weiterhin spielt für den optischen Eindruck beim räumlichen Sehen aber auch die Winkelstellung der Augen zum betrachteten Objekt eine Rolle (Konvergenz). Für die Ermittlung der Entfernung aufgrund der verschiedenen Winkelstellungen der beiden Augen ist es vorteilhaft, das in Fig. 2c gezeigte System mit kreisbogenförmig angeordneten Display-Elementen zu verwenden. Der räumliche Eindruck kann dadurch verbessert werden. Die in Fig. 2c gezeigte Ausführungsform hat den weiteren Vorteil, daß der Aspektwinkelbereich, unter dem das Objekt gesehen werden kann, in größerem Maße und einfacher vergrößert werden kann als bei dem in Fig. 2 gezeigten Beispiel.

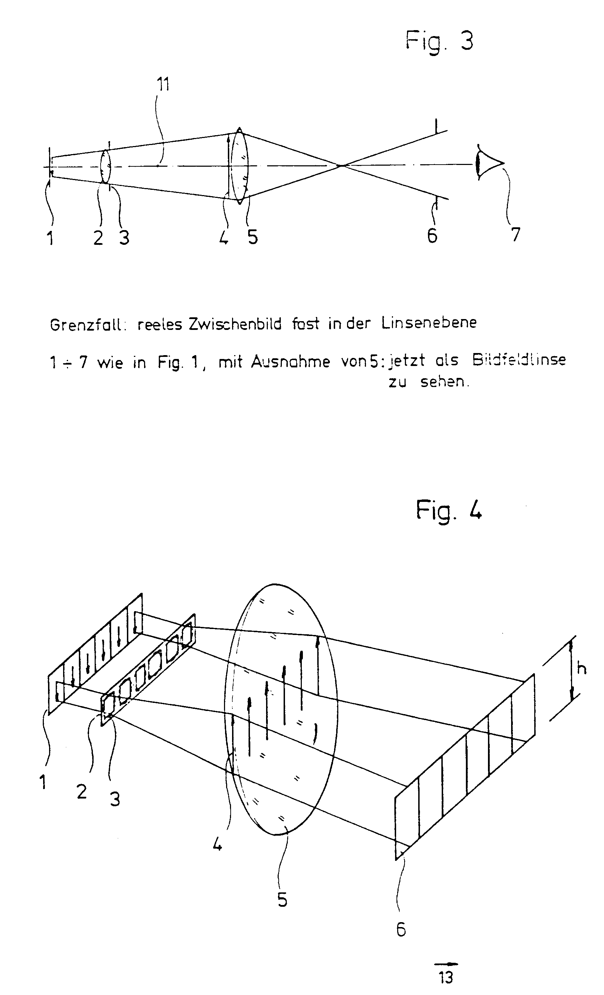

In den Figuren 3 und 4 ist ein den Figuren 1 und 2 entsprechendes System gezeigt, bei dem gleiche Teile mit gleichen Bezugsziffern versehen sind. Der Unterschied zwischen beiden Systemen besteht darin, daß bei dem in den Figuren 3 und 4 gezeigten System das reelle Zwischenbild 4 in die Ebene der Lupe 5 fällt, die dadurch zu einer Bildfeldlinse wird. Auch bei dem System der Figuren 3 und 4 kann anstelle der in Fig. 4 gezeigten, in einer Ebene fluchtenden Anordnung der Display-Elemente 1 die in der Fig. 2c gezeigte Anordnung der Display-Elemente auf einem Kreisbogen gewählt werden. Es können natürlich auch bei der Fig. 4 anstelle der gezeigten einzigen Lupe mehrere Lupen verwendet werden.

In der Fig. 2 ist die Höhe der Austrittsluke 6 mit h bezeichnet. Diese Höhe h ist gleichzeitig die Höhe des Einblickbereiches in das Darstellungssystem. Um Bewegungen des Betrachters in vertikaler Richtung ausgleichen zu können, ist es erforderlich, daß die Höhe h eine bestimmte Mindestgröße erreicht. Die Höhe h kann dadurch vergrößert werden, daß in der Ebene des reellen Zwischenbildes 4 eine Bildfeldlinse mit zylindrischer Komponente angeordnet wird. Die zylindrische Komponente sorgt dabei dafür, daß die Höhe h vergrößert wird. Die Achse der zylindrischen Komponente zeigt dabei in horizontale Richtung, also in die Richtung sowohl senkrecht zur Höhe h als auch senkrecht zum Strahlengang.

Eine in der Ebene des reellen Zwischenbildes 4 angeordnete Linse mit zylindrischer Komponente kann auch in der Ausführungsform gemäß Fig. 2c verwendet werden. Dabei ist jedoch zu beachten, daß die reellen Zwischenbilder 4 nicht mehr in einer einzigen Ebene liegen. Die dadurch hervorgerufenen Abweichungen sind jedoch im allgemeinen nicht so groß, daß dadurch die Funktionsfähigkeit des Systems in Frage gestellt wäre. Bei größer werdenden Abweichungen kann auch eine Vorkorrektur bereits auf den Display-Elementen 1 vorgesehen werden.

Bei dem in den Figuren 3 und 4 dargestellten Ausführungsbeispiel kann ebenfalls eine Linse mit zylindrischer Komponente in der Ebene des reellen Zwischenbildes 4 dadurch realisiert werden, daß die Lupe 5 mit einer zylindrischen Komponente versehen wird. Durch die Addierung einer zylindrischen Komponente in der Ebene des reellen Zwischenbildes 4 wird bewirkt, daß in der horizontalen Richtung (senkrecht zur Höhe h) die Abbildung gleichbleibt und daß in der vertikalen Richtung (parallel zur Höhe h) die Abbildung gestreckt wird. Weiterhin wird auch die Ebene der Austrittsluke 6 nach hinten in Richtung des Pfeiles 13 verschoben. Selbstverständlich muß die zylindrische Komponente in der Weise gewählt werden, daß tatsächlich eine Vergrößerung eintritt.

In den Figuren 3 und 4 ist ein Grenzfall gezeigt: Das reelle Zwischenbild 4 befindet sich nicht hinter der Lupe 5, sondern genau in der Ebene der Lupe 5. Diese Ausführungsform eignet sich insbesondere für die Verwendung in CAD/CAM-Systemen oder bei Werbe-Displays und bei Videospielen und bei Simulatoren, während sich die in den Figuren 1 und 2 gezeigte Ausführungsform insbesondere für die Verwendung in Head-Up-Displays anbietet. Bei dem System nach den Figuren 3 und 4 (Grenzfall) sieht der Betrachter den abgebildeten Gegenstand im wesentlichen in der Ebene der Lupe 5. Der abzubildende Körper kann in diesem Fall auch ganz oder teilweise auf der dem Betrachter zugewandten Seite der Lupe 5 lokalisiert sein; der Körper kann also dem Betrachter "entgegenragen". Wenn bei einem System nach den Figuren 3 und 4 die in Fig. 2c gezeigte Anordnung der Display-Elemente 1 auf einem Kreisbogen gewählt wird, treten dieselben Probleme auf, die bereits oben anhand der Fig. 2c und der Figuren 1 und 2 beschrieben worden sind.

Das in Fig. 2c gezeigte Beispiel wurde bereits oben beschrieben. Hierbei sind die Display-Elemente 1 an einem Kreisbogen angeordnet. Jedes einzelne Display-Element verläuft dabei tangential zum Kreisbogen, auf dem alle Display-Elemente angeordnet sind. Dies führt dazu, daß die reellen Zwischenbilder 4 der Display-Elemente im Winkel zueinander stehen. Diese Verhältnisse sind in der Fig. 2d gezeigt. Die Display-Elemente 21 bis 27 sind längs des Kreisbogens 28 angeordnet, wobei jedes einzelne Displayelement tangential zum Kreisbogen 28 verläuft. Längs des Kreisbogens 29 sind die Linsen 31 bis 37 angeordnet, wobei die Mittelebenen der Linsen tangential zum Kreisbogen 29 verlaufen. Der Mittelpunkt der Kreisbögen 28 und 29 ist mit 41 bezeichnet. Rund um den Mittelpunkt 41 sind die reellen Zwischenbilder 4 angeordnet. Das Display-Element 21 wird dabei durch die Linse 31 in das reelle Zwischenbild 51 abgebildet usw. Das Display- Element 27 wird durch die Linse 37 in das reelle Zwischenbild 57 abgebildet. Sämtliche reellen Zwischenbilder stehen also im Winkel zueinander. Hierdurch entstehen Verzerrungen, die jedoch im allgemeinen sehr klein sind und zu keiner wesentlichen Beeinträchtigung führen. Wenn aber eine Bildfeldlinse mit oder ohne zylindrischer Komponente in der Ebene des reellen Zwischenbildes 4 gesetzt wird, tritt folgender Fehler auf: Die Mittelebene der Bildfeldlinse liegt in der Ebene des reellen Zwischenbildes 54 in der Fig. 2d. Das reelle Zwischenbild 54 wird also von der Bildfeldlinse korrekt weitergegeben. Hinsichtlich der anderen Zwischenbilder 51 bis 53 und 55 bis 57 treten jedoch Fehler auf. Derjenige Bereich, der auf der den Display-Elementen 21 bis 27 zugewandten Seite der Ebene 61, also der Ebene des Zwischenbildes 54 liegt, wird dann durch die Bildfeldlinse vergrößert, während der auf der anderen Seite der Ebene 61 liegende Bereich des jeweiligen reellen Zwischenbildes verkleinert wird. In der zweiten Abbildungsstufe wird derjenige Teil des jeweiligen Zwischenbildes, der näher an der Lupe 5 liegt, weniger stark vergrößert als derjenige Teil des jeweiligen Zwischenbildes, der von der Lupe 5 weiter entfernt liegt. Hierdurch können Abbildungsfehler entstehen, die nicht mehr tolerierbar sind und ausgeglichen werden müssen.

Der Ausgleich der soeben beschriebenen Fehler kann dadurch geschehen, daß bereits auf den Display-Elementen eine Darstellung gewählt wird, die dem soeben beschriebenen Fehler Rechnung trägt. Sie kann weiterhin dadurch geschehen, daß die Display-Elemente wie in Fig. 2e dargestellt, angeordnet werden. Die Linsen 31' bis 37' sind nach wie vor auf demselben Kreisbogen 29 angeordnet; ebenso wie in der Fig. 2d verlaufen die Mittelebenen dieser Linsen nach wie vor tangential zum Kreisbogen 29. Die Display-Elemente werden jedoch teilweise verändert. Das parallel zur Mittelebene 61 der Bildfeldlinse verlaufende Displayelement 24' bleibt unverändert; es befindet sich also nach wie vor in einer Stellung tangential zum Kreisbogen 28, auf dem die Display-Elemente angeordnet sind. Das nächste Display-Element 25' wird jedoch um einen Winkel geneigt angeordnet. Dadurch erreicht man, daß auch das Bild des Display-Elements 25' parallel zu demjenigen des Elements 24' liegt; beide Bilder liegen also parallel zur Mittelebene 61 der Bildfeldlinse. Die durch die in Fig. 2e dargestellte Abbildungsgeometrie hervorgerufenen Verzerrungen müssen auf den Display-Elementen vorkorrigiert bzw. vorkompensiert werden. Das an das Display-Element 25' anschließende Display-Element 26' ist ebenfalls geneigt, und zwar um einen Winkel, der größer ist als die Neigung des Elements 25'. In gleicher Weise ist das Display-Element 27' stärker geneigt als die beiden vorhergehenden Elemente. Je weiter ein Display-Element von dem mittleren Display-Element 24' entfernt ist, desto stärker muß es auch gegenüber der Tangente des Kreisbogens 28 geneigt sein. Die Art der Neigung ist dabei aus der Fig. 2e ersichtlich. Sie ist so gewählt, daß sämtliche reellen Zwischenbilder 51' bis 57' in der Mittelebene 61 der Bildfeldlinse liegen. Die Anordnung ist so getroffen, daß alle reellen Zwischenbilder parallel zueinander und praktisch an derselben Stelle liegen.

Wie bereits oben beschrieben, kann an der Stelle des reellen Zwischenbildes 4 eine Linse mit zylindrischer Komponente vorgesehen werden. In dem in den Figuren 3 und 4 gezeigten Beispiel muß dabei die Lupe 5 mit einer zylindrischen Komponente versehen werden. Bei der in den Figuren 3 und 4 dargestellten Ausführungsform kann der durch die zylindrische Komponente der Lupe 5 hervorgerufene Effekt der Aufweitung des Einblickbereiches h auch dadurch erzeugt werden, daß die Oberfläche der Lupe 5 mit einem Zylinderlinsenraster versehen wird, wobei die Zylinderachsen in horizontaler Richtung verlaufen. Das Raster muß ein feines Raster sein, also ein Raster mit einem Rasterabstand von etwa 0,1 bis 1 mm. Der Rasterabstand ist abhängig von der gewünschten Gesamtauflösung. Alternativ dazu kann ein einachsiger Diffusor verwendet werden. Dabei handelt es sich um ein optisches Element, welches in horizontaler Richtung statistische Linienstrukturen aufweist, wie sie beispielsweise dadurch erzeugt werden können, daß ein optisches Substrat (Plexiglas, Kunststoffolie, Glas) in horizontaler Richtung gebürstet wird. Die hindurchtretenden Lichtstrahlen werden dadurch in vertikaler Richtung diffus aufgeweitet, in horizontaler Richtung jedoch nicht verändert. Die Tiefenlokalisation der dargestellten Objekte bleibt also erhalten. Wenn die in den Fig. 1 und 2 dargestellte Ausführungsform gewählt wird, ist es grundsätzlich auch möglich, ein Zylinderlinsenraster oder einen einachsigen Diffusor der oben angegebenen Art vorzusehen. Hierbei ergeben sich jedoch Nachteile hinsichtlich Lichtstärke und Auflösung.

Anstelle der oben beschriebenen transmissiven optischen Elemente können stets auch analoge reflektive optische Elemente (z.B. Hohlspiegel) eingesetzt werden. Ebenso können holographische optische Elemente (HOE) verwendet werden. Wenn als Lupe 5 ein Hohlspiegel verwendet wird, kann die optische Aufweitung durch einen einachsigen Diffusor dadurch verwirklicht werden, daß der Hohlspiegel in einer horizontalen Richtung gebürstet wird. Bei früheren optischen Systemen wurden teilweise sehr aufwendige Projektionsschirme benötigt. Wenn, wie in Fig. 4 gezeigt, die Ebene des reellen Zwischenbildes 4 mit der Ebene der Lupe 5 übereinstimmt, und wenn weiterhin diese Lupe 5 mit einem einachsigen Diffusor versehen wird, kommt man ohne aufwendige Projektionsschirme aus.

Bei der Verwendung von einachsigen Diffusoren, wie sie oben beschrieben worden sind, oder einfachen Zylinderlinsenrastern treten Verzerrungen auf analog zu den oben beschriebenen (Fig. 2d und 2e) Verzerrungen, die durch analoge Maßnahmen korrigiert werden können. Werden diese Korrekturmaßnahmen getroffen, ist es prinzipiell möglich, mit diesen einfachen Projektionsschirmen (einachsiger Diffusor, einfaches Zylinderlinsenraster) auszukommen.

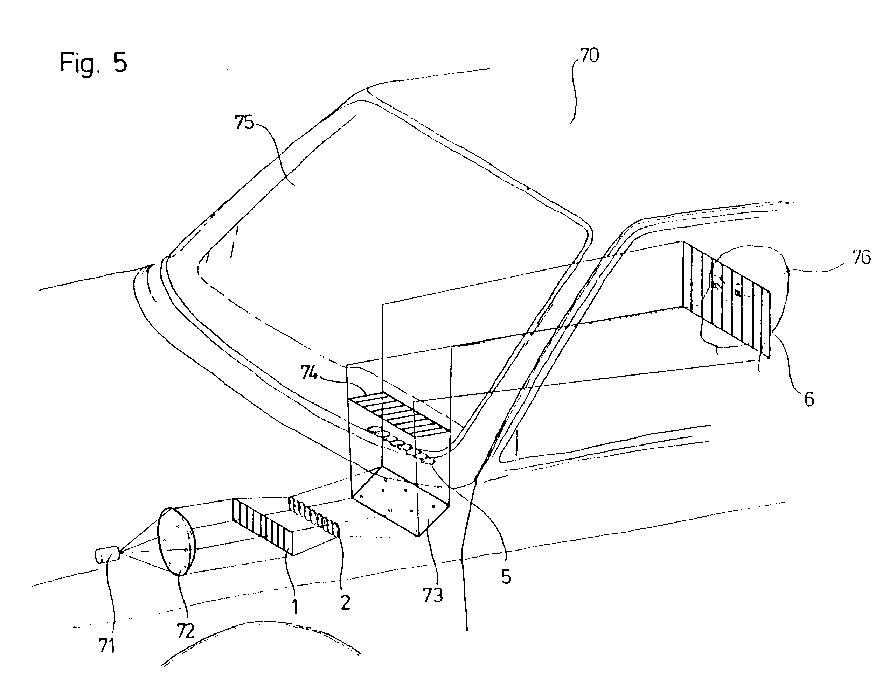

In der Fig. 5 ist das oben beschriebene optische Display-System in einem Kraftfahrzeug 70 gezeigt. Die von der Lichtquelle 71 ausgehenden Lichtstrahlen werden von der Kondensorlinse 72 gebündelt und zum Display-Array 1 geleitet. Hinter dem Display-Array ist die Abbildungsoptik 2 angeordnet, die aus mehreren nebeneinanderliegenden Einzellinsen besteht. Die einzelnen Linsen der Abbildung 2 sind im allgemeinen Fall korrigiert. Über den Spiegel 73 werden die Strahlen auf den Lupen-Array 5 weitergeleitet. Hinter der Lupe 5 befindet sich das Schutzfenster 74, durch welches hindurch die Lichtstrahlen auf die Windschutzscheibe 75 des Kraftfahrzeugs 70 fallen. Von der Windschutzscheibe werden sie in Richtung des Fahrers 76 geleitet. Vor den Augen des Fahrers befindet sich die Austrittsluke 6. Bei dieser Austrittsluke 6 handelt es sich um das reelle Bild der Feldblenden 3, also der äußeren Begrenzungen der Linsen 2. In der Fig. 5 sind zehn nebeneinanderliegende optische Kanäle gezeigt. Dadurch, daß die Bilder der insgesamt zehn Feldblenden reelle Bilder sind, ist sichergestellt, daß der Fahrer stets mit seinen beiden Augen in jeweils unterschiedliche Kanäle blickt. Die insgesamt zehn reellen Bilder 6 der Feldblenden sollen unmittelbar aneinander anschließen, damit möglichst geringe Übergangsbereiche vorhanden sind. Wenn also der Fahrer eine leichte Bewegung nach links oder rechts macht, gibt es an den Übergangszonen zwischen den Bildern der Feldblenden nur eine geringe Störung.

Um eine insgesamt korrekte Abbildung zu erreichen, muß das gesamte Abbildungssystem in sich korrigiert sein. Dazu gehört die Korrektur der asymmetrisch gekrümmten, in das System einbezogenen Windschutzscheibe. Diese Korrektur kann auf verschiedene Weise erfolgen. Es ist zum einen möglich, bereits bei den einzelnen Display-Elementen 1 anzusetzen und diese softwareseitig zu korrigieren. Insgesamt betrachtet sind die Korrekturansprüche um so geringer, je feiner die Rasterung ist, je schmaler also die einzelnen Kanäle sind. Eine weitere Korrekturmöglichkeit besteht darin, die einzelnen Linsen der Abbildungsoptik 2 auf den jeweiligen Bereich der Windschutzscheibe 75 abzustimmen. Gleiches kann mit den einzelnen Linsen der Lupe 5 geschehen. In jedem Fall sind die Korrekturbedürfnisse umso geringer, je feiner die Rasterung der Kanäle ist. Durch eine zunehmende Verfeinerung wird jedoch die Lichtstärke herabgesetzt und das Gesichtsfeld verkleinert, so daß ein Kompromiß zwischen ausreichender Lichtstärke und ausreichend großem Gesichtsfeld einerseits sowie genügend feiner Rasterung andererseits gefunden werden muß.

Durch das erfindungsgemäße stereoskopische Display-System kann das dargestellte Symbol oder Objekt dem Betrachter in verschiedenen Entfernungen erscheinen, obwohl es stets in derselben Entfernung optisch lokalisiert ist. Durch diese feste optische Lokalisierung reduzieren sich insgesamt die Korrekturansprüche. Der Entfernungseindruck des Betrachters, der durch die stereoskopischen Gesetze erzeugt wird, wird in erster Linie durch die Querdisparation hervorgerufen. Der Entfernungseindruck hängt also davon ab, welche Querdisparation vorhanden ist und nicht davon, in welcher Entfernung die beiden Darstellungen für die beiden Augen optisch lokalisiert sind. Bei dem erfindungsgemäßen System wird die optische Lokalisierung der Darstellung nicht verändert. Individuell verschiedene Windschutzscheibenkrümmungen, die auch bei Fahrzeugen desselben Typs aufgrund von Fertigungsungenauigkeiten auftreten, führen zu unterschiedlichen Lokalisierungen. Da jedoch der Entfernungseindruck des Betrachters unter den hier gegebenen Verhältnissen nur unwesentlich von der optischen Lokalisierung abhängt, erhält man eine große Toleranz gegenüber diesen individuellen Windschutzscheiben-Abweichungen.

Wie bereits erwähnt, hat jede Windschutzscheibe auch desselben Fahrzeugtyps eine leicht abweichende Form. Um das gesamte System auf eine bestimmte einzelne Windschutzscheibe einjustieren zu können, kann folgende Möglichkeit vorgesehen werden: In einer eigens dafür vorgesehenen Betriebsart des Systems wird ein Testmuster auf die Display-Elemente gegeben. Dieses Testmuster wird dann an der Austrittsluke durch eine geeignete Zusatzeinrichtung, bestehend aus Abbildungsoptik und optischem Detektorsystem, aufgefangen. Für jeden einzelnen Bildpunkt jedes Displayelements kann derart festgestellt werden, an welchem entsprechenden Bildpunkt der Austrittspupille dieser Punkt abgebildet wird. Dadurch läßt sich bei Abtastung sämtlicher Punkte der Display-Elemente eine Verzerrungsmatrix ermitteln, die zur Korrektur der jeweiligen individuellen Abweichungen herangezogen werden kann.

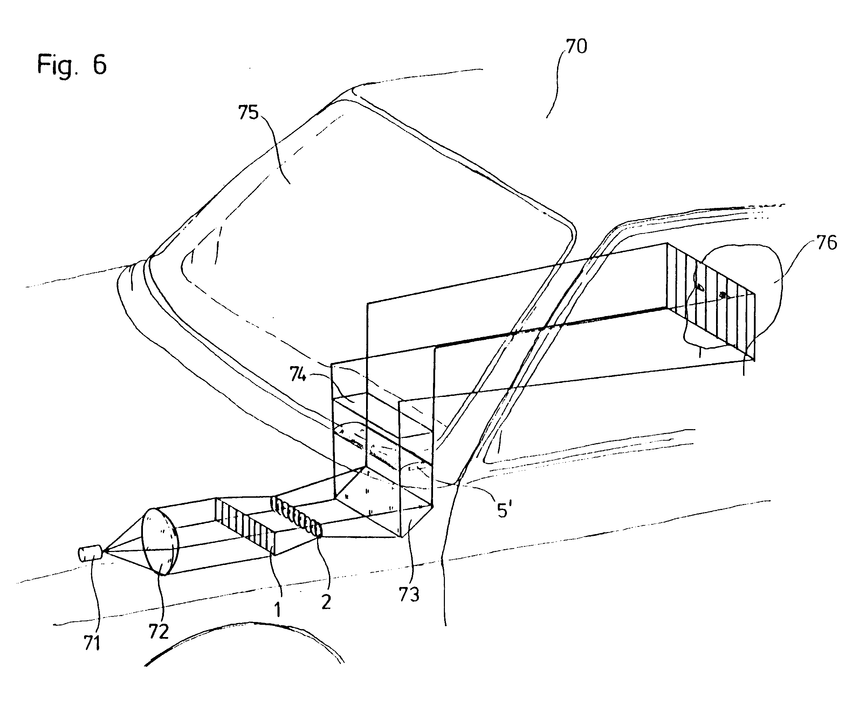

Die Fig. 6 zeigt in einer der Fig. 5 entsprechenden Darstellung ein abgewandeltes stereoskopisches Display-System, bei dem gleiche Teile mit gleichen Bezugsziffern versehen sind, so daß sie nicht mehr im einzelnen beschrieben werden müssen. Anstelle mehrerer Lupen 5 ist in der Fig. 6 eine einzige Lupe 5' vorgesehen. Dadurch wird ein größeres Gesichtsfeld und auch eine größere Lichtstärke erreicht. Andererseits steigen jedoch auch die Korrekturansprüche.

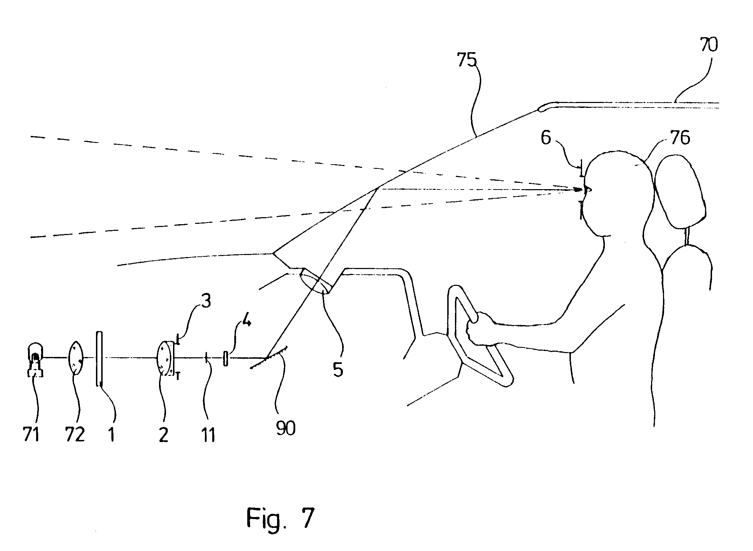

Fig. 7 zeigt ein weiteres Ausführungsbeispiel. Von der Lichtquelle 71 ausgehende Lichtstrahlen werden durch die Kondensorlinse 72 gebündelt und auf das Display-Element 1 geleitet. Die Abbildungsoptik 2 erzeugt das reelle Zwischenbild 4. Die Lupe 5, deren Brennpunkt mit 11 bezeichnet ist, erzeugt ein virtuelles Bild der dazustellenden Symbole in einiger Entfernung vor dem Fahrer 76, beispielsweise 6 bis 20 Meter vor dem Fahrer. Gleichzeitig bildet die Lupe 5 die Feldblende 3 reell vor dem Fahrer in dessen Augenbereich 6 ab. Der Umlenkspiegel 90 kann flexibel und mechanisch justierbar ausgeführt werden. Der Spiegel 90 kann damit zusätzlich zur Korrektur der Windschutzscheibe 75 beitragen. Dabei kann von dem Spiegel 90 bereits die normale, reguläre Form der Windschutzscheibe 75 korrigiert werden. Es ist auch möglich, den Spiegel 90 dazu einzusetzen, die individuellen Abweichungen der verschiedenen Windschutzscheiben auszugleichen. Anstelle dieses Spiegels kann auch ein entsprechendes holographisch optisches Element (HOE) verwendet werden.

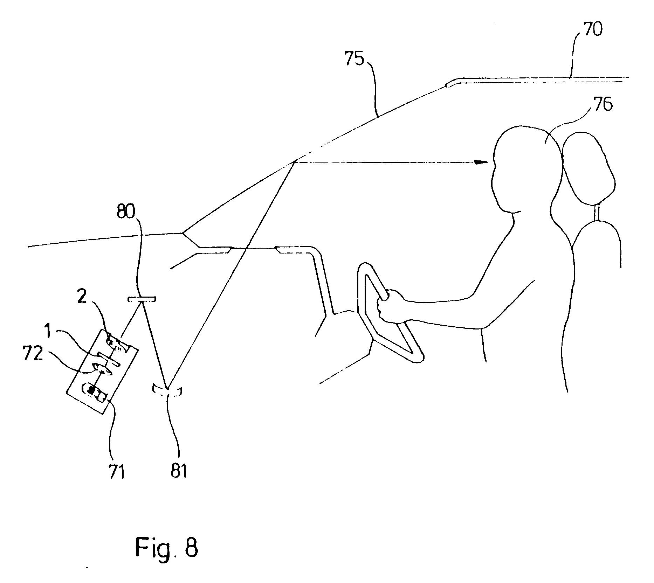

Fig. 8 zeigt eine der Fig. 7 entsprechende Darstellung einer weiteren Ausführungsform, bei der gleiche Teile mit gleichen Bezugsziffern versehen sind. Der Umlenkspiegel 80 kann am Ort des reellen Zwischenbildes lokalisiert sein und durch entsprechende zylindrische und/oder sphärische Krümmungskomponenten die Funktion einer oben beschriebenen Bildfeldlinse übernehmen. Der konkav gekrümmte Spiegel 81 erfüllt die Funktion der Lupe. Die Verwendung eines konkaven Hohlspiegels 81 hat einen weiteren Vorteil: Durch die konkav gekrümmte Windschutzscheibe 75 entstehen astigmatische Aberrationen beim hier vorhandenen schrägen Einfall der Lichtbündel. Diese Aberrationen werden teilweise ausgeglichen, wenn ein entsprechender schräger Einfall des Lichts am konkaven Spiegel 81 stattfindet.

## Patentansprüche

1. Stereoskopisches Display-System für ein Kraftfahrzeug, bestehend aus
mehr als zwei Display-Elementen (1; 21-27; 21'-27'; 102),
einer Abbildungsoptik (2; 31-37; 31'-37') mit einer der Anzahl der Display-Elemente entsprechenden Anzahl von Abbildungselementen zur Erzeugung einer gleichen Anzahl reeller Zwischenbilder (4; 51-57; 51'-57'),
einer der Anzahl der Abbildungselemente entsprechenden Anzahl von Aperturblenden (3),
mindestens einer Lupe (5) zur Erzeugung eines reellen Bildes der Aperturblenden (3) der Abbildungselemente (2) im Augenbereich (6) des Betrachters,
wobei der Brennpunkt (11) der Lupe (5) in der Ebene des reellen Zwischenbildes (4) oder im Strahlengang vor dem reellen Zwischenbild (4) angeordnet ist
und wobei die Überlagerung mit der Außensicht durch eine Spiegelung an der Windschutzscheibe des Kraftfahrzeuges erfolgt.

2. Stereoskopisches Display-System nach Anspruch 1, dadurch gekennzeichnet, daß die Ränder der Abbildungsoptik (2) als Aperturblende (3) dienen.

3. Stereoskopisches Display-System nach Anspruch 1 oder 2, dadurch gekennzeichnet, daß der Brennpunkt (11) der Lupe (5) in der Ebene des reellen Zwischenbildes (4) angeordnet ist.

4. Stereoskopisches Display-System nach Anspruch 1 oder 2, dadurch gekennzeichnet, daß der Brennpunkt (11) der Lupe (5) im Strahlengang vor dem reellen Zwischenbild (4) angeordnet ist.

5. Stereoskopisches Display-System nach einem der Ansprüche 1, 2 oder 4, dadurch gekennzeichnet, daß das reelle Zwischenbild (4) in der Mittelebene der Lupe (5) erzeugt wird, wodurch die Lupe zu einer Bildfeldlinse wird.

6. Stereoskopisches Display-System nach einem der vorhergehenden Ansprüche, dadurch gekennzeichnet, daß nur eine Lupe (5) vorgesehen ist.

7. Stereoskopisches Display-System nach einem der Ansprüche 1 bis 5, dadurch gekennzeichnet, daß mehrere Lupen (5) vorgesehen sind, deren Anzahl vorzugsweise der Anzahl der Abbildungselemente (2) entspricht.

8. Stereoskopisches Display-System nach einem der vorhergehenden Ansprüche, dadurch gekennzeichnet, daß die Display-Elemente (1) längs einer Geraden angeordnet sind.

9. Stereoskopisches Display-System nach einem der Ansprüche 1 bis 7, dadurch gekennzeichnet, daß die Display-Elemente (21-27) längs eines ersten Kreisbogens (28) angeordnet sind und
daß die Abbildungselemente (31-37) längs eines zweiten Kreisbogens (29) mit kleinerem Radius und demselben Mittelpunkt (41) angeordnet sind,
so daß die reellen Zwischenbilder (51-57) in der Nähe dieses gemeinsamen Mittelpunktes (41) erzeugt werden.

10. Stereoskopisches Display-System nach Anspruch 9, dadurch gekennzeichnet, daß die Display-Elemente (21-27) tagential zu dem ersten Kreisbogen (28) angeordnet sind.

11. Stereoskopisches Display-System nach Anspruch 9, dadurch gekennzeichnet, daß die Display-Elemente (21'-27') im Winkel zu dem ersten Kreisbogen (28) angeordnet sind, wobei der Winkel, ausgehend von dem mittleren Display-Element (24'), mit zunehmender Entfernung von diesem derart zunimmt, daß die reellen Zwischenbilder im wesentlichen an derselben St elle in der Nähe des Mittelpunktes der Kreisbögen und im wesentlichen parallel zueinander entstehen.

12. Stereoskopisches Display-System nach einem der Ansprüche 5 bis 11, dadurch gekennzeichnet, daß die Lupe (5) eine zylindrische Komponente besitzt, deren Achse horizontal, also senkrecht zur Höhe (h) des reellen Bildes der Feldblenden und senkrecht zum Strahlengang, gerichtet ist.

13. Stereoskopisches Display-System nach Anspruch 12, dadurch gekennzeichnet, daß die Lupe (5) ein Zylinderlinienraster, vorzugsweise ein feines Raster mit einem Rasterabstand von 0,1 - 1 mm, oder einen einachsigen Diffusor mit statistischen Linienstrukturen in horizontaler Richtung, aufweist.

14. Stereoskopisches Display-System nach einem der vorhergehenden Ansprüche, dadurch gekennzeichnet, daß die Abbildungsoptik (2) und/oder die Lupe (5) aus reflektiven optischen Elementen, vorzugsweise Hohlspiegeln und/oder aus HOE, d.h. holographisch optischen Elementen, bestehen.

15. Stereoskopisches Display-System nach einem der vorhergehenden Ansprüche, dadurch gekennzeichnet, daß die Display-Elemente aus folgenden Elementen bestehen: Ein CRT, d.h. Cathode Ray Tube-Display, eine Kathodenstrahlröhre mit mindestens zwei unabhängigen Display-Bereichen; mehrere Kathodenstrahlröhren; LCD, d.h. Liquid Crystal Display-Anzeigen; transmissive oder reflektive LCD-Anzeigen; Elektrolumineszenz-Elemente; Plasma-Display-Elemente.

16. Stereoskopisches Display-System,
bestehend aus
genau zwei transmissiven, nicht diffus streuenden Display-Elementen (102), vorzugsweise transmissiven LCD, d.h. Liquid-Crystal-Displays,
einer flächigen Lichtquelle (100), vorzugsweise einer ausgeleuchteten Mattschiebe, im Strahlengang vor den Display-Elementen (102),
genau zwei Lupen (5), deren eine ein reelles Bild der flächigen Lichtquelle (100) im Bereich eines Auges des Betrachters und deren andere ein reelles Bild der flächigen Lichtquelle im Bereich des anderen Auges des Betrachters erzeugt,
wobei der Brennpunkt der Lupen (5) in der Ebene der Display-Elemente (102) oder im Strahlengang vor der Ebene der Display-Elemente (102) angeordnet ist
und wobei die Begrenzungen der flächigen Lichtquelle (100) derart ausgestaltet sind, daß die beiden reellen Bilder der flächigen Lichtquelle (100) einander nicht überlappen.

17. Stereoskopisches Display-System nach Anspruch 16, dadurch gekennzeichnet, daß die Begrenzungen der flächigen Lichtquelle (100) derart ausgestaltet sind, daß die beiden reellen Bilder der flächigen Lichtquelle (100) unmittelbar aneinander angrenzen, vorzugsweise längs der Mittelsenkrechten zwischen den Augen des Betrachters.

18. Stereoskopisches Display-System nach einem der Ansprüche 16 oder 17, dadurch gekennzeichnet, daß die Begrenzungen der flächigen Lichtquelle (100) an den beiden seitlichen Rändern durch vertikale Begrenzungslinien gebildet werden.

19. Stereoskopisches Display-System nach einem der Ansprüche 16 ibs 18, dadurch gekennzeichnet, daß im Strahlengang zwischen den Display-Elementen (102) und der flächigen Lichtquelle (100), vorzugsweise möglichst nahe an den Display-Elementen (102), eine weitere Linse (103) angeordnet ist.

20. Kraftfahrzeug, dadurch gekennzeichnet, daß es ein stereoskopisches Display-System nach einem der Ansprüche 1 bis 19 aufweist.

21. Kraftfahrzeug nach Anspruch 20, dadurch gekennzeichnet, daß die Überlagerung mit der Außensicht durch Spiegelung an der Windschutzscheibe des Kraftfahrzeuges erfolgt.

## Claims

1. Stereoscopical display system for a motor vehicle comprising more than two display elements (1; 21-27; 21'-27'; 102),
one optical imaging means (2; 31-37; 31'-37') with a number of imaging elements which equals the number of the display elements, for the generation of an equal number of real intermediate images (4; 51-57; 51'-57'),
a number of aperture diaphragms (3) equaling the number of the imaging elements, at least one magnifying lens (5) for the generation of a real image of the aperture diaphragms (3) of the imaging elements (2) in the eye zone (6) of the spectator, the focal point (11) of the magnifying lens (5) being disposed in the plane of the real intermediate image (4) or in front of the real intermediate image (4) in the path of rays,
and the superposition with the exterior view being realised by a reflexion at the windshield of the motor vehicle.

2. Stereoscopical display system according to Claim 1, characterized in that the edges of the optical imaging means (2) serve as aperture diaphragms (3).

3. Stereoscopical display system according to Claim 1 or 2, characterized in that the focal point (11) of the magnifying lens (5) is disposed in the plane of the real intermediate image (4).

4. Stereoscopical display system according to Claim 1 or 2, characterized in that the focal point (11) of the magnifying lens (5) is disposed in front of the real intermediate image (4) in the path of rays.

5. Stereoscopical display system according to one of the Claims 1, 2 or 4, characterized in that the real intermediate image (4) is generated in the central plane of the magnifying lens (5), the magnifying lens being an image field lens in this case.

6. Stereoscopical display system according to any of the preceding claims, characterized in that only a single magnifying lens (5) is provided.

7. Stereoscopical display system according to one of the Claims 1 to 5, characterized in that several magnifying lenses (5) are provided which number equals preferably the number of the imaging elements (2).

8. Stereoscopical display system according to any of the preceding claims, characterized in that the display elements (1) are arranged in alignment.

9. Stereoscopical display system according to one of the Claims 1 to 7, characterized in that the display elements (21-27) are disposed along a first circular arc (28) and that the imaging elements (31-37) are disposed along a second circular arc (29) with shorter radius and same center (41), in such a way that the real intermediate images (51-57) are generated near this joint center (41).

10. Stereoscopical display system according to Claim 9, characterized in that the display elements (21-27) are disposed tangential to the first circular arc (28).

11. Stereoscopical display system according to Claim 9, characterized in that the display elements (21'-27') are disposed at an angle to the first circular arc (28), whereby the angle, parting from the display element (24') in the middle, is increasing with growing distance from this element, in such a way that the real intermediate images are generated essentially at the same place near the center of the circular arcs and essentially parallel to each other.

12. Stereoscopical display system according to one of the Claims 5 to 11, characterized in that the magnifying lens (5) has a cylindrical component which axe is directed horizontally, that is vertically to the height (h) of the real image of the field diaphragms and vertically to the path of rays.

13. Stereoscopical display system according to Claim 12, characterized in that the magnifying lens (5) presents a grid of cylindrical lenses, preferably a fine grid with a grid distance of 0.1 to 1 mm, or an uniaxial diffuser with statistical line structures in the horizontal direction.

14. Stereoscopical display system according to any of the preceding claims, characterized in that the optical imaging means (2) and/ or the magnifying lens (5) are consisting of reflecting optical elements, preferably concave mirrors and/ or HOE, that is holographical optical elements.

15. Stereoscopical display system according to any of the preceding claims, characterized in that the display elements are consisting of the following elements: A CRT, that is a cathode-ray tube display, a cathode-ray tube with at least two independant display areas; several cathode-ray tubes; LCD's, that is liquid cristal displays; transmissiv or reflecting LCD-displays; electroluminescent elements; plasma display elements.

16. Stereoscopical display system consisting of
exactly two transmissiv, non-diffusing display elements (102), preferably transmissiv LCD's, that is liquid cristal displays,
one plane luminous source (100), preferably luminous frosted glass, in front of the display elements (102) in the path of rays,
exactly two magnifying lenses (5), one of which is generating a real image of the plane luminous source (100) in the zone of one eye of the spectator, and the other is generating a real image of the plane luminous source in the zone of the other eye of the spectator, the focal point of the magnifying lenses (5) being in the plane of the display elements (102) or in front of the plane of the display elements (102) in the path of rays, and the limitations of the plane luminous source (100) being formed in such a way that the two real images of the plane luminous source (100) are not overlapping each other.

17. Stereoscopical display system according to Claim 16, characterized in that the limitations of the plane luminous source (100) are formed in such a way that the two real images of the plane luminous source (100) are directly adjacent, preferably along the median perpendicular between the eyes of the spectator.

18. Stereoscopical display system according to one of the Claims 16 or 17, characterized in that the limitations of the plane luminous source (100) at the two lateral edges are formed by vertical limitation lines.

19. Stereoscopical display system according to one of the Claims 16 to 18, characterized in that there is disposed another lens (103) in the path of rays between the display elements (102) und the plane luminous source (100), preferably the closest possible to the display elements (102).

20. Motor vehicle, characterized in that it comprises a stereoscopical display system according to one of the Claims 1 to 19.

21. Motor vehicle according to Claim 20, characterized in that the superposition with the exterior view is achieved by reflexion at the windshield of the vehicle.

## Revendications

1. Ensemble d'affichage stéréoscopique pour un véhicule au moteur comprenant plus que deux éléments (1; 21-27; 21'-27'; 102) d'affichage,
une optique (2; 31-37; 31'-37') de reproduction avec un nombre, egal au nombre des éléments d'affichage, d'éléments de reproduction produisant un même nombre d'images intermédiaires réelles ( 4; 51-57; 51'-57'),
un nombre, egal au nombre des éléments de reproduction, de diaphragmes (3) d'ouverture,
au moins une loupe (5) créant une image réelle des diaphragmes (3) d'ouverture des éléments (2) de reproduction dans la zone des yeux (6) du spectateur, le foyer (11) du loupe (5) étant disposé au plan de l'image intermédiaire réelle (4) ou devant l'image intermédiaire réelle (4) dans la marche des rayons, et la superpositon avec la vue exterieur s'effectuant par une réflexion à la glace pare-brise du véhicule.

2. Ensemble d'affichage stéréoscopique selon la revendication 1 caractérisé en ce que les bords de l'optique (2) de reproduction font fonction de diaphragme (3) d'ouverture.

3. Ensemble d'affichage stéréoscopique selon la revendication 1 ou 2 caractérisé en ce que le foyer (11) de la loupe (5) est disposé au plan de l'image intermédiaire réelle (4).

4. Ensemble d'affichage stéréoscopique selon la revendication 1 ou 2 caractérisé en ce que le foyer (11) de la loupe (5) est disposé devant l'image intermédiaire réelle (4) dans la marche des rayons.

5. Ensemble d'affichage stéréoscopique selon la revendication 1, 2 ou 4 caractérisé en ce que l'image intermédiaire réelle (4) est créée au plan médian du loupe (5), la loupe devenant ainsi une lentille de champ d'image.

6. Ensemble d'affichage stéréoscopique selon l'une quelconque des revendications précédentes caractérisé en ce qu'il n'est pourvu qu'une loupe (5) unique.

7. Ensemble d'affichage stéréoscopique selon l'une des revendications 1 à 5 caractérisé en ce qu'il est pourvu de plusieures loupes (5) dont le nombre est de préférence égal au nombre des éléments (2) de reproduction.

8. Ensemble d'affichage stéréoscopique selon l'une quelconque des revendications précédentes caractérisé en ce que les éléments (1) d'affichage sont disposés au long d'une ligne droite.

9. Ensemble d'affichage stéréoscopique selon l'une des revendications 1 à 7 caractérisé en ce que les éléments (21-27) d'affichage sont disposés au long d'un premier arc (28) de cercle, et que les éléments (31-37) d'affichage sont disposés au long d'un deuxième arc (29) de cercle avec un même centre (41) et un rayon plus petit de sorte que les images intermédiaires réelles (51-57) sont créés près de ce centre (41) commun.

10. Ensemble d'affichage stéréoscopique selon la revendication 9 caractérisé en ce que les éléments (21-27) d'affichage sont disposés tangentiellement au premier arc (28) de cercle.

11. Ensemble d'affichage stéréoscopique selon la revendication 9 caractérisé en ce que les éléments (21'-27') d'affichage sont disposés angulairement au premier arc (28) de cercle, cette angle, en partant de l'élément (24') d'affichage au milieu, étant croissant avec la distance à cet élément médian de sorte que les images intermédiaires réelles (4) se produisent sensiblement au même endroit près du centre des arcs de cercle, et sensiblement parallèlles entre elles.

12. Ensemble d'affichage stéréoscopique selon l'une des revendications 5 à 11 caractérisé en ce que la loupe (5) possède une composante cylindrique dont l'axe est disposé en horizontale, c'est-à-dire perpendiculaire à la hauteur (h) de l'image réelle des diaphragmes de champ, et perpendiculaire à la marche des rayons.

13. Ensemble d'affichage stéréoscopique selon la revendication 12 caractérisé en ce que la loupe (5) présente un réseau de lentilles de cylindre, préferentiellement un réseau fin d'un intervalle de réseau allant de 0.1 à 1 mm, ou un diffuseur uniaxe d'une structure statistique des lignes en direction horizontal.

14. Ensemble d'affichage stéréoscopique selon l'une quelconque des revendications précédentes caractérisé en ce que l'optique (2) de reproduction et/ ou la loupe (5) sont constituées d'éléments optiques réfléchissants, de préférence de réflecteurs de concentration et/ ou de HOE, à savoir d'éléments optiques holographiques.

15. Ensemble d'affichage stéréoscopique selon l'une quelconque des revendications précédentes caractérisé en ce que les éléments d'affichage sont constitués des éléments suivants: Un CRT, à savoir un affichage de type "cathode ray tube", une tube cathodique comprenant au moins deux zones independantes d'affichage; un LCD, à savoir un affichage de type "liquid cristal display"; des affichages LCD transmittifs ou réfléchissants; des éléments d'électroluminescence; des éléments d'affichage au plasma.

16. Ensemble d'affichage stéréoscopique constitué par précisement deux éléments (102) transmettants et non diffusants d'affichage, de préférence un LCD transmettant, à savoir un affichage "liquid cristal display"; une source lumineuse plane (100), de préférence un verre dépoli lumineux qui est situé devant les éléments (102) d'affichage dans la marche des rayons; précisement deux loupes (5) dont l'une produit une image réelle de la source lumineuse plane (100) dans la zone d'un oeil du spectateur, et l'autre une image réelle de la source lumineuse plane dans la zone de l'autr'oeil du spectateur, le foyer des loupes (5) étant disposé au plan des éléments (102) d'affichage ou devant le plan des éléments (102) d'affichage dans la marche des rayons, et les limitations de la source lumineuse plane (100) étant formées de façon que les deux images réelles de la source lumineuse plane (100) ne se superposent pas.

17. Ensemble d'affichage stéréoscopique selon la revendications 16 caractérisé en ce que les limitations de la source lumineuse plane (100) sont formées de façon que les deux images réelles de la source lumineuse plane (100) sont contiguës, de préférence au long d'une perpendiculaire médiane entre les yeux du spectateur.

18. Ensemble d'affichage stéréoscopique selon l'une des revendications 16 ou 17 caractérisé en ce que à l'endroit des deux bords laterals les limitations de la source lumineuse plane (100) sont formées par des lignes verticales de limitation.

19. Ensemble d'affichage stéréoscopique selon l'une des revendications 16 à 18 caractérisé par le fait qu'une autre lentille (103) est disposée entre les éléments (102) d'affichage et la source lumineuse plane (100) dans la marche des rayons, préférentiellement aussi proche que possible aux éléments (102) d affichage.

20. Véhicule à moteur caractérisée en ce qu'elle présente un ensemble d'affichage stéréoscopique selon l'une des revendications 1 à 19.

21. Véhicule à moteur caractérisée en ce que la superposition avec la vue exterieur s'effectue par moyen de réflexion à la glace pare-brise de la véhicule.
